# EUROPEAN PATENT SPECIFICATION

(11) **EP 3 250 415 B1**
(45) Date of publication and mention of the grant of the patent: **27.11.2019**
(21) Application number: 15701775.7
(22) Date of filing: 28.01.2015
(51) Int. Cl.: B60R 13/00

(54) **AUTOMOTIVE DECORATION PART WITH IMPROVED INSTALLATION CHARACTERISTICS**
AUTOMOBILDEKORATIONSTEIL MIT VERBESSERTEN INSTALLATIONSEIGENSCHAFTEN
PARTIE DE DÉCORATION D'AUTOMOBILE À CARACTÉRISTIQUES D'INSTALLATION AMÉLIORÉES

(43) Date of publication of application: 06.12.2017
(73) Proprietor: Toyota Motor Europe, 1140 Brussels (BE)
(72) Inventor: ALTUNCAN, Hakan, B-1200 Brussels (BE); FLORES, Ruben, E-48901 Barakaldo (ES)
(74) Representative: Cabinet Beau de Loménie
(86) International application number: PCT/EP2015/051723
(87) International publication number: WO 2016/119842

(56) References cited:
- WO-A1-2012/173248
- JP-A- H09 175 285
- JP-U- S 623 351
- JP-U- S6 157 058
- JP-U- S6 185 545
- JP-U- S6 436 255
- JP-U- S54 134 446
- JP-U- S58 150 607
- US-A- 4 506 419

## Description

### Field of the Disclosure

The present disclosure is related to automotive decorations, and more particularly to automotive decorations having improved characteristics for facilitating installation on an automobile.

### Background of the Disclosure

Installation ergonomics have become more important recently as employers seek to improve working conditions for their employees. Work on an assembly-line can sometimes result in certain repetitive actions which may not be ergonomically sound for a worker, and may result in certain discomfort for such an employee.

At the same time, quality standards are continuously rising as manufacturers continually improve their assembly techniques and provide their workers with improved tools and parts designed to improve installation characteristics.

One example can be found in vehicle trim pieces (e.g., automotive decorations). Installation of such trim pieces can be problematic based on installation location access, and methods used for such installation. It is often desirable to fasten such trim pieces to a vehicle without the any visual sign of such fasteners on an exterior of the vehicle. This can result in workers having to take ergonomically unfriendly positions in order to accomplish the installation.

WO 2012173248 discloses a radiator grille clip for attaching a radiator grille to a vehicle, the radiator grille clip being constituted by a first clip provided at one end thereof with a grille mating portion for assembly to a mounting portion furnished to the radiator grille, and a second clip provided with an assembly portion for attachment to a bracket furnished to the vehicle, and a mating portion that mates with the first clip. JP S58-150607 and JP S61-057058 disclose housing and fastener systems.

### SUMMARY OF THE DISCLOSURE

In view of the above, it is desirable to improve installation characteristics of vehicle parts.

Therefore, according to embodiments of the present disclosure an assembly for a vehicle part according to claim 1 is provided.

The clipping means may be attached to an exterior surface of the fastener receiving means.

The clipping means may span between 2 and 100 percent of the periphery of the fastener receiving means.

The vehicle part may be a decorative front-grille insert.

The assembly force adjusting means may include two or more slots formed in a wall of the channel to form a tab.

The tab may be configured to interface with a clipping means present on the fastener doghouse to prevent the fastener doghouse from exiting the channel.

The fastener interface may be configured to interface with a screw head of a retaining screw.

The channel may be shaped to receive the fastener doghouse with at least a partial interference fit.

The housing may comprise at least a portion of an automotive front-grille mounting assembly.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, serve to explain the principles thereof.

### BRIEF DESCRIPTION OF THE DRAWINGS

Fig. 1 shows a front end of an exemplary vehicle including a decorative part affixed to another portion of vehicle;
Fig. 2 shows a portion of a back side of an exemplary vehicle decorative part;
Fig. 3 shows an exemplary housing on a vehicle for receiving a fastener receiver;
Fig. 4 is a schematic of an exemplary assembly configuration of the vehicle decorative part of Fig. 2 and the housing of Fig. 3.

### DESCRIPTION OF THE EMBODIMENTS

Reference will now be made in detail to exemplary embodiments of the disclosure, examples of which are illustrated in the accompanying drawings. Wherever possible, the same reference numbers will be used throughout the drawings to refer to the same or like parts.

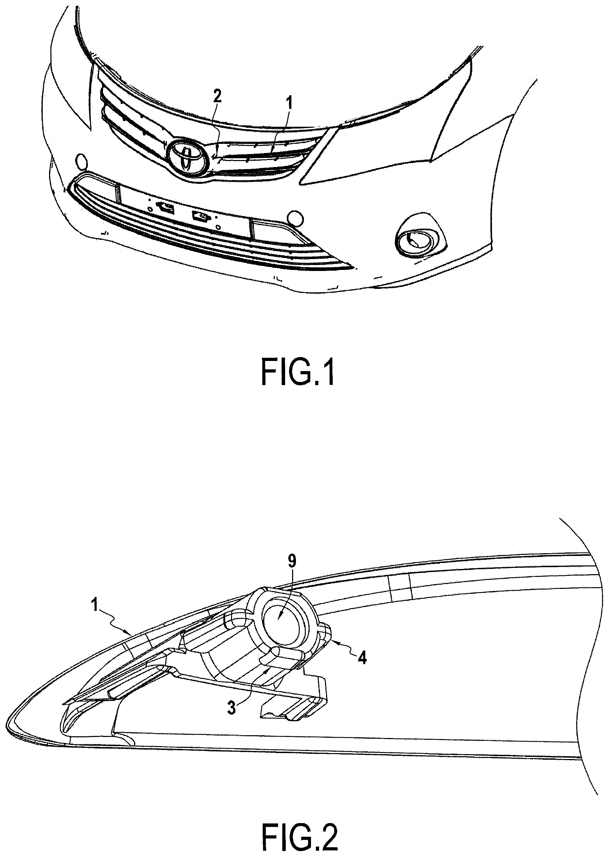

Fig. 1 shows a front end of an exemplary vehicle including a decorative part 1 (e.g., a vehicle grille insert) affixed to another portion of vehicle, e.g., a grille 2. As can be seen at Fig. 1, depending on a desired fastening scheme for decorative part 1, an installer may apply fastening pressure from either a front side or a back side of grille 2. However, to apply a counter force during such installation, an ergonomically unfriendly position may have to be assumed by the installer, e.g., reaching one hand behind or in front while operating a screw tightening tool.

Fig. 2 shows a portion of a back side of an exemplary vehicle decorative part 1 of the present disclosure, in this particular example, a vehicle grille insert. Decorative part 1 includes a fastener doghouse 4 extending from decorative part 1 and having a fastener receiver 9 such that at least the fastener receiver portion of fastener doghouse 4 may be inserted into a housing 7 and allowed to receive a fastener configured to hold decorative part 1 within housing 7.

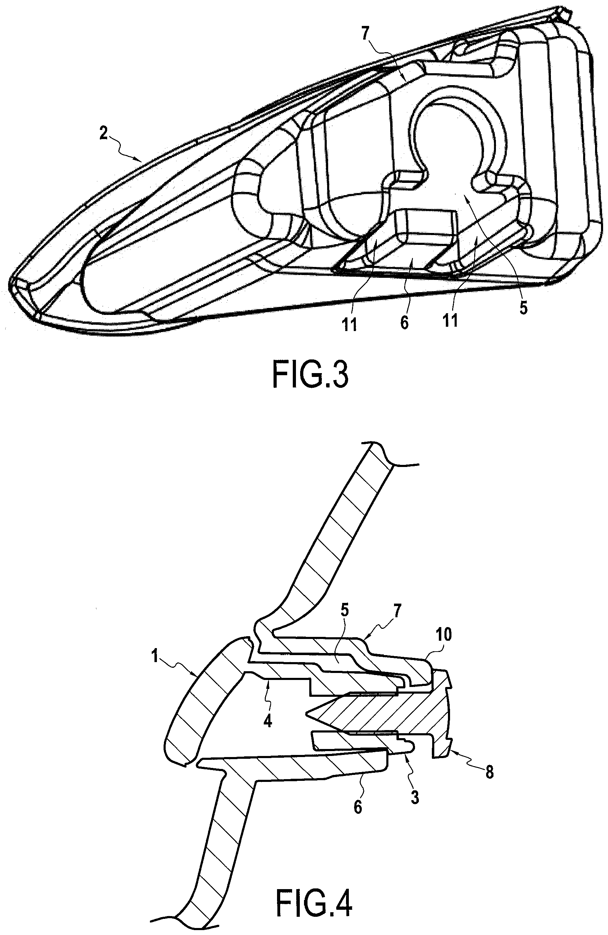

Fig. 3 shows an exemplary housing 7, e.g., a grille housing, on a vehicle for receiving decorative part 1 and more particularly, fastener doghouse 4. Fig. 4 is a schematic of an exemplary assembly configuration of the vehicle decorative part of Fig. 2 and the housing of Fig. 3.

Housing 7 may be formed of any suitable material, e.g., metal, plastic, combinations thereof, etc., and may be installed on a vehicle (e.g., using fasteners, etc.). Housing 7 may be configured to house a vehicle decorative part, such as, for example, a chrome grille insert. Therefore, housing 7 may be shaped accordingly for a particular decoration part, for example, shaped having similar contours to a chrome grille insert to be inserted.

Housing 7 may include a channel 5 configured to receive at least a portion of fastener doghouse 4 extending from decorative part 1, among others, so as to enable secure fastening of decorative part 1 within housing 7.

Channel 5 may have any suitable shape and may correspond to a shape of fastener doghouse 4 on decorative part 1. According to some embodiments, channel 5 may be shaped to receive fastener doghouse 4 with at least a partial interference fit (i.e., negative clearance) such that a force is necessary to press fastener doghouse 4 into housing channel 5. For example, channel 5 may present a partial "keyhole" shape, a round shape, a rectangular shape, etc.

At one end of channel 5, a fastener interface 10 may be provided for interfacing with a fastening feature (e.g., a screw head) of a fastener 8. Such a fastener interface 10 may comprise, for example, a chamfered edge, a reinforced edge, etc. Further, channel 5 may present a depth that is suitable for meeting particular design criteria associated with a mounting location of decorative part 1.

Channel 5 may include features configured to adjust an assembly force during insertion of fastener doghouse 4 and also to interface with a retaining feature (e.g., raised portion 3) of fastener doghouse 4 to improve ergonomics of installation. For example, an elastic tab 6 enabling deflection of a portion of channel 5 (i.e., tab 6) during insertion of the portion of fastener doghouse 4 so as to adjust assembly force during insertion of the portion of fastener doghouse 4 (e.g., fastener receiver 9) may be provided. Depending on various criteria (e.g., thickness, length, etc.) it may be possible to vary the installation force versus retention force (e.g. interference) associated with tab 6. One of skill in the art will understand that such adjustments are intended to fall within the scope of the present disclosure.

Elastic tab 6 may be configured to interface with a clip formed by a raised portion 3 present on fastener doghouse 4 to prevent fastener doghouse 4 from exiting channel 5 as a result of force exerted during, for example, insertion and tightening of fastener 8 within fastener receiver 9. Such engagement may comprise formation of a snap-fit connection based on the elastic deformation of elastic tab 6, for example.

Depending on a particular design, elastic tab 6 may extend fully or partially along a length of channel 5, and may be formed via two or more slots 11 present in channel 5.

In other words, a distal portion of elastic tab 6 may be offset from an end portion of channel 5 while a proximal portion of elastic tab 6 is located at an offset distance from the end portion of channel 5 that is greater than the offset distance for the distal end.

Slots 11 may be formed by, for example, cutting after fabrication of housing 7, molding during fabrication of housing 7, or any other suitable method. One of skill in the art understands that methods for forming such parts are known and intended to fall within the scope of the present disclosure.

Fastener doghouse 4 may have any desirable shape in cross-section such that said shape of fastener doghouse 4 enables insertion of fastener doghouse 4 into channel 5 present on housing 7, e.g., with an interference fit. For example, fastener receiver 9 may be substantially round where a substantially round channel 5 is provided. According to other embodiments, fastener doghouse 4 may have a partial keyhole shape corresponding to a similar keyhole shape of housing 7. One of skill will recognize that other shapes may also be suitable, e.g., rectangular.

Fastener doghouse 4 may be substantially affixed to decorative part 1 and may extend away therefrom to offset decorative part 1 a desired depth within housing 7 (e.g., so that decorative part 1 is flush with an outside periphery of housing 7). For example, fastener doghouse 4 may be integrally formed with decorative part 1, e.g., during a molding process, and may span a distance between an installed position of decorative part 1 and fastener interface 10.

Fastener receiver 9 comprises a portion of fastener doghouse 4 and may be configured to receive a fastener 8 (e.g., a screw, bolt, push clip, etc.) so as to retain decorative part 1 in an installed position (e.g., fastener doghouse 4 inserted within housing 7).

Fastener receiver 9 may be formed integrally with fastener doghouse 4 (e.g., by a molding process) and may be, for example, pre-threaded or configured to receive, according to some embodiments a self-tapping fastener 8 to facilitate tightening of said fastener 8. Fastener receiver 9 may be suitably shaped so as to receive the desired type of fastener 8 (e.g., round, round with bayonet, etc.)

A raised portion 3 is provided on fastener doghouse 4, raised portion 3 being configured to interact with at least a portion of housing 7 to retain fastener doghouse 4 within housing 7, particularly during application of force associated with receipt and/or tightening of fastener 8.

For example, raised portion 3 may be provided on an exterior surface of fastener receiver 9, thereby forming a clip. According to some embodiments, raised portion 3 may span between 2 and 100 percent of the periphery of the fastener receiver 9, between 10 and 50 percent, or even between 20 and 40 percent.

Raised portion 3 may then interact with tab 6 on insertion into channel 5, to form, for example, a snap-fit connection. In other words, based on the presence of raised portion 3, as fastener doghouse 4 is inserted into channel 5, raised portion 3 may cause tab 6 to elastically deform away from raised portion 3. Once fastener doghouse 4 has been inserted into channel 5 to a designed depth, raised portion 3 passes the distal portion of tab 6, and tab 6 is enabled to "snap" back to its original position, thereby blocking raised portion 3 from moving back in a direction from which it was inserted, as shown at Fig. 4.

Raised portion 3 may be affixed to fastener doghouse 4 using any suitably means (e.g., adhesive, fasteners, etc.), and according to some embodiments, is formed integrally with fastener doghouse 4 during a molding operation. Additionally, one of skill will recognize that raised portion 3 may also be formed during an over-molding operation, and other similar techniques are intended to fall within the scope of the present disclosure.

Once raised portion 3 has been "clipped," a fastener 8 may be inserted into fastener receiver 9 via fastener interface 10 and channel 5, and tightened as desired, for example, such that a fastening feature (e.g., a screw head) comes into contact with fastener interface 10. Based on the clipping action between raised portion 3 and tab 6, fastener doghouse 4 is prevented from being driven away from fastener 8 due to force applied during fastening.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Where any standards of national, international, or other standards body are referenced (e.g., ISO, etc.), such references are intended to refer to the standard as defined by the national or international standards body as of the priority date of the present specification. Any subsequent substantive changes to such standards are not intended to modify the scope and/or definitions of the present disclosure and/or claims.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. An assembly comprising a vehicle part (1) and a housing (7) on the vehicle, said housing (7) being configured for receiving a fastener receiving means (9) of the vehicle part (1), the vehicle part (1) comprising a fastener doghouse (4) comprising:
the fastener receiving means (9) configured to receive a fastener (8), wherein the fastener receiving means (9) extends from the vehicle part (1) to enable insertion of the fastener receiving means (9) into the housing (7); and
clipping means (3) configured to interact with the housing (7) by snap-fit connection with an elastic tab (6) of the housing (7) to retain the fastener receiving means (9) within the housing (7) in response to a force associated with receipt of the fastener (8); wherein the housing (7) comprises:
a channel (5) configured to receive at least a portion of the fastener doghouse (4), wherein the channel (5) comprises assembly force adjusting means (6) comprising the elastic tab enabling deflection of a portion of the channel (5) during insertion of the fastener doghouse (4); and
a fastener interface (10) opposite the channel (5), and configured to interface with a fastening feature of the fastener (8), the elastic tab (6) being configured to interface with the clipping means (3) to prevent the fastener doghouse (4) from exiting the channel (5) as a result of force exerted during insertion and tightening of the fastener within the fastener receiving means (9).

2. The assembly according to the previous claim, wherein the clipping means (3) is attached to an exterior surface of the fastener receiving means (9).

3. The assembly according to any of the preceding claims, wherein the clipping means (3) is configured to cause an elastic deflection of at least a portion of the housing (7) during insertion of the clipping means (3) into the housing (7).

4. The assembly according to any of the previous claims, wherein the clipping means (3) spans between 2 and 100 percent of the periphery of the fastener receiving means (9).

5. The assembly according to any of the previous claims, wherein the vehicle part is a decorative front-grille insert.

6. The assembly according to claim 1, wherein the assembly force adjusting means (6) comprise two or more slots (11) formed in a wall of the channel (5) to form a tab.

7. The assembly according to any of claims 1-6, wherein the fastener interface (10) is configured to interface with a screw head of a retaining screw (8).

8. The assembly according to any of claims 1-7, wherein the channel (5) is shaped to receive the fastener doghouse (4) with at least a partial interference fit.

9. The assembly according to any of claims 1-8, wherein the housing (7) comprises at least a portion of an automotive front-grille mounting assembly.

## Patentansprüche

1. Baugruppe, die ein Fahrzeugteil (1) und ein Gehäuse (7) an dem Fahrzeug umfasst, wobei das Gehäuse (7) dazu ausgestaltet ist, ein Befestigungselement-Aufnahmemittel (9) des Fahrzeugteils (1) aufzunehmen, wobei das Fahrzeugteil (1) einen Befestigungselementkasten (4) umfasst, der umfasst:
das Befestigungselement-Aufnahmemittel (9), das dazu ausgestaltet ist, ein Befestigungselement (8) aufzunehmen, wobei sich das Befestigungselement-Aufnahmemittel (9) von dem Fahrzeugteil erstreckt, um ein Einsetzen des Befestigungselement-Aufnahmemittels (9) in das Gehäuse (7) zu ermöglichen, und
ein Klemmmittel (3), das dazu ausgestaltet ist, mit dem Gehäuse (7) durch Einrasten mit einer elastischen Lasche (6) des Gehäuses (7) als Reaktion auf eine Kraft, die mit der Aufnahme des Befestigungselements (8) verbunden ist, zusammenzuwirken, um das Befestigungselement-Aufnahmemittel (9) innerhalb des Gehäuses (7) zu halten, wobei das Gehäuse (7) umfasst:
eine Auskehlung (5), die dazu ausgestaltet ist, mindestens einen Teil des Befestigungselementkastens (4) aufzunehmen, wobei die Auskehlung (5) ein Montagekraft-Einstellmittel (6) umfasst, das die elastische Lasche umfasst, die eine Auslenkung eines Teils der Auskehlung (5) während eines Einsetzen des Befestigungselementkastens (4) ermöglicht, und
eine der Auskehlung (5) gegenüberliegende Befestigungselementschnittstelle (10), die dazu ausgestaltet ist, mit einer Befestigungseinrichtung des Befestigungselements (8) zusammenzuwirken, wobei die elastische Lasche (6) dazu ausgestaltet ist, mit dem Klemmmittel (3) zusammenzuwirken, um zu verhindern, dass der Befestigungselementkasten (4) die Auskehlung (5) infolge einer Kraft verlässt, die während des Einsetzens und Festziehens des Befestigungselements in dem Befestigungselement-Aufnahmemittel (9) ausgeübt wird.

2. Baugruppe nach dem vorhergehenden Anspruch,
wobei das Klemmmittel (3) an einer Außenfläche des Befestigungselement-Aufnahmemittels (9) angebracht ist.

3. Baugruppe nach einem der vorhergehenden Ansprüche, wobei das Klemmmittel (3) dazu ausgestaltet ist, während des Einsetzens des Klemmmittels (3) in das Gehäuse (7) eine elastische Auslenkung mindestens eines Teils des Gehäuses (7) zu veranlassen.

4. Baugruppe nach einem der vorhergehenden Ansprüche, wobei das Klemmmittel (3) zwischen 2 und 100 Prozent des Umfangs des Befestigungselement-Aufnahmemittels (9) überspannt.

5. Baugruppe nach einem der vorhergehenden Ansprüche, wobei das Fahrzeugteil ein dekorativer Vordergrilleinsatz ist.

6. Baugruppe nach Anspruch 1, wobei die Montagekraft-Einstellmittel (6) zwei oder mehr Schlitze (11) umfassen, die in einer Wand der Auskehlung (5) ausgebildet sind, um eine Lasche zu bilden.

7. Baugruppe nach einem der Ansprüche 1 bis 6, wobei die Befestigungselementschnittstelle (10) dazu ausgestaltet ist, mit einem Schraubenkopf einer Halteschraube (8) in Wechselwirkung zu treten.

8. Baugruppe nach einem der Ansprüche 1 bis 7, wobei die Auskehlung (5) so geformt ist, dass sie den Befestigungselementkasten (4) mit mindestens einer teilweisen Presspassung aufnimmt.

9. Baugruppe nach einem der Ansprüche 1 bis 8, wobei das Gehäuse (7) mindestens einen Teil einer Kraftfahrzeug-Vordergrill-Montagebaugruppe umfasst.

## Revendications

1. Ensemble comportant une partie de véhicule (1) et un logement (7) sur le véhicule, ledit logement (7) étant configuré pour recevoir des moyens de réception d'élément de fixation (9) de la partie de véhicule (1), la partie de véhicule (1) comportant un réceptacle d'élément de fixation (4) comportant :
les moyens de réception d'élément de fixation (9) configurés pour recevoir un élément de fixation (8), les moyens de réception d'élément de fixation (9) s'étendant depuis la partie de véhicule (1) pour permettre une insertion des moyens de réception d'élément de fixation (9) dans le logement (7) ; et
des moyens d'agrafage (3) configurés pour interagir avec le logement (7) par connexion par encliquetage avec une patte élastique (6) du logement (7) pour retenir les moyens de réception d'élément de fixation (9) à l'intérieur du logement (7) en réponse à une force associée à une réception de l'élément de fixation (8) ; dans lequel
le logement (7) comporte :
un canal (5) configuré pour recevoir au moins une partie du réceptacle d'élément de fixation (4), le canal (5) comportant des moyens d'ajustement de force d'assemblage (6) qui comportent la patte élastique permettant une flexion d'une partie du canal (5) pendant une insertion du réceptacle d'élément de fixation (4) ; et
une interface d'élément de fixation (10) opposée au canal (5), et configurée pour assurer l'interface avec une configuration d'élément de fixation de l'élément de fixation (8), la patte élastique (6) étant configurée pour assurer l'interface avec les moyens d'agrafage (3) pour empêcher le réceptacle d'élément de fixation (4) de sortir du canal (5) en raison d'une force exercée pendant l'insertion et le serrage de l'élément de fixation dans les moyens de réception d'élément de fixation (9).

2. Ensemble selon la revendication précédente, dans lequel les moyens d'agrafage (3) sont fixés sur une surface extérieure des moyens de réception d'élément de fixation (9) .

3. Ensemble selon l'une quelconque des revendications précédentes, dans lequel les moyens d'agrafage (3) sont configurés pour provoquer une flexion élastique d'au moins une partie du logement (7) pendant une insertion des moyens d'agrafage (3) dans le logement (7).

4. Ensemble selon l'une quelconque des revendications précédentes, dans lequel les moyens d'agrafage (3) englobent entre 2 et 100 pour cent de la périphérie des moyens de réception d'élément de fixation (9) .

5. Ensemble selon l'une quelconque des revendications précédentes, dans lequel la partie de véhicule est un insert décoratif de calandre.

6. Ensemble (7) selon la revendication 1, dans lequel les moyens d'ajustement de force d'assemblage (6) comportent deux fentes ou plus (11) formées dans une paroi du canal (5) pour former une patte.

7. Ensemble selon l'une quelconque des revendications 1 à 6, dans lequel l'interface d'élément de fixation (10) est configurée pour assurer l'interface avec une tête de vis d'une vis de retenue (8).

8. Ensemble (7) selon l'une quelconque des revendications 1 à 7, dans lequel le canal (5) est formé pour recevoir le réceptacle d'élément de fixation (4) avec au moins un ajustement avec interférence partielle.

9. Ensemble selon l'une quelconque des revendications 1 à 8, dans lequel le logement (7) comporte au moins une partie d'un ensemble de montage de calandre d'automobile.
